(19) Europäisches Patentamt / European Patent Office / Office européen des brevets

(11) **EP 4 007 016 B1**

(12) **EUROPEAN PATENT SPECIFICATION**

(45) Date of publication and mention of the grant of the patent:
**25.10.2023 Bulletin 2023/43**

(21) Application number: **19939927.0**

(22) Date of filing: **31.07.2019**

(51) International Patent Classification (IPC):
**H01M 4/587** (2010.01)     **H01M 4/36** (2006.01)
**H01M 4/02** (2006.01)      **H01M 10/0525** (2010.01)
**H01M 4/1393** (2010.01)     **C01B 32/205** (2017.01)
**H01M 4/62** (2006.01)

(52) Cooperative Patent Classification (CPC):
**H01M 10/0525; C01B 32/205; H01M 4/1393; H01M 4/587; H01M 4/622;** Y02E 60/10

(86) International application number:
**PCT/JP2019/030011**

(87) International publication number:
**WO 2021/019726 (04.02.2021 Gazette 2021/05)**

(54) **METHOD OF MANUFACTURING NEGATIVE ELECTRODE MATERIAL FOR LITHIUM ION SECONDARY BATTERY AND METHOD OF MANUFACTURING LITHIUM ION SECONDARY BATTERY**

VERFAHREN ZUR HERSTELLUNG VON NEGATIVEM ELEKTRODENMATERIAL FÜR LITHIUM-IONEN-SEKUNDÄRBATTERIE UND VERFAHREN ZUR HERSTELLUNG EINER LITHIUM-IONEN-SEKUNDÄRBATTERIE

PROCÉDÉ DE FABRICATION DE MATIÈRE D'ÉLECTRODE NÉGATIVE POUR BATTERIE SECONDAIRE AU LITHIUM-ION ET PROCÉDÉ DE FABRICATION DE BATTERIE SECONDAIRE AU LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.06.2022 Bulletin 2022/22**

(73) Proprietor: **Resonac Corporation**
**Tokyo 105-8518 (JP)**

(72) Inventors:
• **SATO, Takeshi**
**Tokyo 105-8518 (JP)**
• **MIYAUCHI, Takayuki**
**Tokyo 105-8518 (JP)**
• **KAGAWA, Takuya**
**Tokyo 105-8518 (JP)**
• **IKEDA, Yusuke**
**Tokyo 105-8518 (JP)**

(74) Representative: **Berggren Oy**
**P.O. Box 16**
**Eteläinen Rautatiekatu 10A**
**00101 Helsinki (FI)**

(56) References cited:
**EP-A1- 1 478 038       EP-A1- 3 131 143**
**WO-A1-2012/133699    WO-A1-2015/147012**
**JP-A- 2004 127 913    JP-A- 2013 201 104**
**US-A1- 2004 023 115**

**Description**

The present invention relates to a method of manufacturing a negative electrode material for a lithium ion secondary battery, and a method of manufacturing a lithium ion secondary battery.

Because lithium ion secondary batteries have a higher energy density than other secondary batteries such as nickel-cadmium batteries, nickel-hydride batteries, and lead-acid batteries, the lithium ion secondary batteries are widely used as power sources for portable electrical appliances such as laptop computers and mobile phones. Furthermore, use of lithium ion secondary batteries has been expected not only for relatively small electrical appliances but also for electric vehicles, power sources for power storage, and the like.

As a material of a negative electrode for a lithium ion secondary battery, graphite is widely used. As the method of manufacturing the negative electrode material using graphite, for example, Patent Literature 1 describes the method of grinding a mixture obtained by mixing a carbon material, a binder, and the like, performing graphitization treatment in a state in which the obtained ground product is molded using a mold, and further grinding the obtained graphitized product.

[Prior Art Document]

[Patent Literature]

[Patent Literature] WO 2015/147012

EP 3 131 143 A1 discloses a negative electrode material for lithium-ion secondary battery, a method for manufacturing negative electrode material for lithium-ion secondary battery, a negative electrode material slurry for lithium-ion secondary battery, a negative electrode for lithium-ion secondary battery, and a lithium-ion secondary battery.

WO 2012/133699 A1 discloses a negative electrode carbon material for non-aqueous secondary battery, a negative electrode, and a non-aqueous secondary battery.

US 2004/023115 A1 discloses lithium rechargeable battery.

EP 1 478 038 A1 discloses a negative electrode material for lithium ion secondary battery.

Demand for lithium ion secondary batteries for electrical appliances, electric vehicles, power sources for power storage, and the like has been increasing, and along with the demand, the lithium ion secondary batteries excellent in cycle characteristics has been required.

In view of the above circumstances, the object of the present invention is to provide a method of manufacturing a negative electrode material for a lithium ion secondary battery capable of manufacturing a lithium ion secondary battery excellent in cycle characteristics and a method of manufacturing a lithium ion secondary battery excellent in cycle characteristics.

The subject matter of the present invention is characterized in the claims. Specific means for achieving the above-mentioned objective include the following aspects.

<1> A method of manufacturing a negative electrode material for a lithium ion secondary battery, the method comprising: (a) a step of obtaining a mixture containing a graphitizable aggregate and a graphitizable binder; (b) a step of obtaining a molded product with a density of 1.3 g/cm$^3$ or less by molding the mixture; (c) a step of obtaining a graphitized product by graphitizing the molded product; and (d) a step of obtaining a ground product by grinding the graphitized product, wherein the graphitizable aggregate includes coke, the graphitizable binder includes at least one selected from the group consisting of a pitch, a tar, a thermoplastic resin and a thermosetting resin and a content of the graphitizable binder is from 10 parts by mass to 30 parts by mass with respect to 100 parts by mass of the graphitizable aggregate or a content rate of the graphitizable binder is from 10% by mass to 25% by mass with respect to the mixture.

<2> The method of manufacturing a negative electrode material for a lithium ion secondary battery according to <1>, wherein a standard deviation of particle size distribution of the aggregate is less than 0.20.

<3> The method of manufacturing a negative electrode material for a lithium ion secondary battery according to <1> or <2>, wherein the mixture comprises a dispersant, and the dispersant includes a hydrocarbon, a fatty acid, a fatty acid metal salt, a fatty acid amide, a fatty acid ester, or a higher alcohol.

<4> The method of manufacturing a negative electrode material for a lithium ion secondary battery according to <3>, wherein the dispersant comprises the fatty acid. <5> The method of manufacturing a negative electrode material for a lithium ion secondary battery according to any one of <1> to <4>, wherein a blending amount of the binder is 25% by mass with respect to the mixture.

<6> A method of manufacturing a lithium ion secondary battery, the method comprising a step of producing a negative electrode by using a negative electrode material obtained by the method of manufacturing a negative electrode material for a lithium ion secondary battery according to any one of <1> to <5>.

<7> A method of manufacturing a lithium ion secondary battery, the method comprising: a step of manufacturing a negative electrode material by the method of manufacturing a negative electrode material for a lithium ion secondary battery according to any one of <1> to <5>; and a step of producing a negative electrode by using the negative electrode material for a lithium ion secondary battery.

According to the present invention, a method of manufacturing a negative electrode material for a lithium ion secondary battery capable of manufacturing a lithium ion secondary battery excellent in cycle characteristics and a method of manufacturing a lithium ion secondary battery excellent in cycle characteristics can be provided.

In the present disclosure, the term "step" means not only a step independent from other steps, but also a step that is not clearly distinguished from other steps as long as the purpose of the step is achieved.

In the present disclosure, a numerical value range expressed using "to" includes numerical values before and after "to" as a minimum value and a maximum value.

In stepwise numerical value ranges stated in the present disclosure, the upper limit value or the lower limit value stated in one numerical value range may be replaced with the upper limit value or the lower limit value of another stated stepwise numerical value range. In addition, in a numerical value range described in the present disclosure, the upper limit value or the lower limit value of this numerical value range may be replaced with values shown in Examples.

Regarding each of components in the present disclosure, a plurality of substances corresponding thereto may be contained. In a case in which a plurality of substances corresponding to each of the components is present in a composition, a content rate or a content of each of the components means a total content rate or a total content of a plurality of substances corresponding thereto present in the composition unless otherwise specified.

Regarding each of components in the present disclosure, a plurality of types of particles corresponding thereto may be included. In a case in which a plurality of types of particles corresponding to each of the components is present in the composition, a particle size of each of the components means a value of a mixture of a plurality of types of particles corresponding thereto present in the composition unless otherwise specified.

In the present disclosure, the term "layer" refers to not only a case of being formed over the entire region but also a case of being formed only in a part of the region when observing the region in which the layer is present.

A method of manufacturing a negative electrode material for a lithium ion secondary battery (hereinafter also referred to as negative electrode material) of the present disclosure includes:

(a) a step of obtaining a mixture containing a graphitizable aggregate and a graphitizable binder;
(b) a step of obtaining a molded product with a density of 1.3 $g/cm^3$ or less by molding the mixture;
(c) a step of obtaining a graphitized product by graphitizing the molded product; and
(d) a step of obtaining a ground product by grinding the graphitized product, wherein the graphitizable aggregate includes coke, the graphitizable binder includes at least one selected from the group consisting of a pitch, a tar, a thermoplastic resin and a thermosetting resin and a content of the graphitizable binder is from 10 parts by mass to 30 parts by mass with respect to 100 parts by mass of the graphitizable aggregate or a content rate of the graphitizable binder is from 10% by mass to 25% by mass with respect to the mixture.

In the above-mentioned method, after obtaining the mixture containing the graphitizable aggregate and the graphitizable binder, the molded product with the density of 1.3 $g/cm^3$ or less is obtained by molding the mixture. In the method, after obtaining the molded product with a relatively low density, the thus obtained molded product is graphitized, and then the graphitized product is ground. In this case, the graphitized product can be ground more easily than in a case in which the graphitized product obtained by using the molded product with a relatively high density is ground. As a result, the ground product with a low specific surface area can be obtained. By using the negative electrode material including the ground product with a low specific surface area for the production of the lithium ion secondary battery, a contact area of the negative electrode material with the electrolytic solution can be reduced. Thereby, it is possible that the decomposition reaction of the electrolytic solution can be inhibited to make the battery life long, and the lithium ion secondary battery excellent in the cycle characteristics can be manufactured.

Each step in the above method may be performed continuously or not continuously. Each step of the above method may be performed at the same place or at a different place.

In the step (a), the mixture containing the graphitizable aggregate and the graphitizable binder is obtained. The method of obtaining the mixture is not particularly limited, and the method can be performed using a kneader or the like. The mixing is preferably performed at a temperature at which the graphitizable binder softens. Specifically, in a case in which the graphitizable binder is pitch and/or tar, the temperature may be from 50°C to 300°C, and in a case in which the graphitizable binder is a thermosetting resin, the temperature may be from 20°C to 100°C.

The graphitizable aggregate is not particularly limited as long as it is graphitized by graphitization treatment and as long as it includes coke such as fluid coke, needle coke, and mosaic coke, and it is preferable to use needle coke. The graphitizable aggregate is preferably in the form of particles.

For example, an average particle size of the graphitizable aggregate is preferably from 5 μm to 40 μm, more preferably from 10 μm to 30 μm, and still more preferably from 10 μm to 25 μm. The average particle size is, for example, a volume average particle size (D50) measured by a laser diffraction/scattering method described below.

For example, a standard deviation of the particle size distribution of the graphitizable aggregate is preferably 0.20 or less, more preferably 0.18 or less, and still more preferably 0.16 or less. When the above-mentioned standard deviation of the particle size distribution of the aggregate is 0.20 or less, variation in the particle size of the aggregate is reduced, and variation in the particle size of the obtained ground product is also inhibited. By using the negative electrode material, which includes the ground product with small variation in the particle size, in the production of a lithium ion secondary battery, the resistance distribution in the negative electrode can be made uniform, and as a result, the quick charging performance of the lithium ion secondary battery tends to improve. Further, by reducing the variation in the particle size of the aggregate, the function as a binder can be suitably secured, even if a content rate or a content of the graphitizable binder is reduced. The standard deviation of the particle size distribution is, for example, a value (volume basis) measured by the laser diffraction/scattering method.

The lower limit of the standard deviation of the particle size distribution of the graphitizable aggregate is not particularly limited, and for example, may be 0.05 or more, or may be 0.10 or more.

Examples of methods of adjusting the average particle size of the graphitizable aggregate and the standard deviation of the particle size distribution of the graphitizable aggregate to the above-mentioned ranges include sieve classification, wind power classification, and wet classification.

The graphitizable binder is not particularly limited as long as it is graphitized by graphitization treatment and as long as it includes at least one selected from the group consisting of a pitch, a tar, a thermoplastic resin and a thermosetting resin, for example coal-based, petroleum-based, or artificial pitches and tars, thermoplastic resins, and thermosetting resins.

According to the present invention the content of the graphitizable binder is from 10 parts by mass to 30 parts by mass, and may be from 12 parts by mass to 25 parts by mass, or may be from 14 parts by mass to 20 parts by mass, with respect to 100 parts by mass of the graphitizable aggregate (or a content rate of the graphitizable binder is from 10% by mass to 25% by mass with respect to the mixture containing the graphitizable aggregate and the graphitizable binder). When the content of the binder is 10 parts by mass or more, the binder tends to function suitably as a binder for the graphitizable aggregate. When the content of the binder is 30 parts by mass or less, a sufficient amount of fixed carbon in the mixture is secured, and the yield tends to be excellent.

The content rate of the graphitizable binder is preferably from 10% by mass to 20% by mass, more preferably from 10% by mass to 19% by mass, and particularly preferably from 12% by mass to 18% by mass, with respect to 100% by mass of the mixture.

The graphitizable aggregate and the graphitizable binder contained in the mixture may be only one component or two or more components, respectively. The mixture may contain a component other than these components. Examples of the component other than the graphitizable aggregate or the graphitizable binder include graphite, a dispersant, and a graphitization catalyst.

The mixture may contain the graphite. Examples of the graphite include natural graphite and artificial graphite. The graphite is preferably in the form of particles. The mixture may contain only one type of graphite, or may contain two or more types of graphite.

The mixture preferably contains the dispersant from the viewpoint of easily dispersing the components in the mixture in the step (b). Because the mixture contains the dispersant, the variation in the particle size of the ground product obtained by grinding the graphitized product can be inhibited, and the ground product whose particle size is made uniform can be easily obtained. As a result, the quick charging performance of the lithium ion secondary battery tends to improve.

Further, the inclusion of the dispersant in the mixture leads to a reduction in the amount of graphitizable binder, and can be expected to improve battery characteristics such as an initial charge and discharge efficiency of the negative electrode material.

The type of the dispersant is not particularly limited. According to the present invention, the dispersant includes a hydrocarbon, a fatty acid, a fatty acid metal salt, a fatty acid amide, a fatty acid ester, or a higher alcohol. Specific examples of the dispersant include liquid paraffin, paraffin wax, and polyethylene wax as hydrocarbons; stearic acid, oleic acid, erucic acid, and 12-hydroxystearic acid as fatty acids; zinc stearate, lead stearate, aluminum stearate, calcium stearate, and magnesium stearate as fatty acid metal salts; stearic acid amides, oleic acid amides, erucic acid amides, methylenebisstearic acid amides, and ethylenebisstearic acid amides as fatty acid amides; stearic acid monoglyceride, stearyl stearate, and hardened oils as fatty acid esters; and stearyl alcohol as an example for higher alcohols. Among them, fatty acids are preferable, and stearic acid is more preferable, from the viewpoint that they are less likely to affect the performance of the negative electrode material, are easily handled because they are solid at room temperature, are uniformly dispersed to dissolve at the temperature in the step (a), disappear in a process before graphitization treatment, and are inexpensive.

In a case in which the mixture contains the dispersant, the amount thereof is not particularly limited. For example, the content rate of the dispersant with respect to the whole mixture may be from 0.1% by mass to 20% by mass, may be from 0.5% by mass to 10% by mass, or may be from 0.5% by mass to 5% by mass.

The mixture preferably contains the graphitization catalyst from the viewpoint of promoting the graphitization of the graphitizable aggregate or the graphitizable binder. The type of the graphitization catalyst is not particularly limited. Specifically, examples of the graphitization catalysts include substances having a graphitization catalyst action such as silicon, iron, nickel, titanium, and boron; and carbides, oxides, and nitrides of these substances.

In a case in which the mixture contains the graphitization catalyst, the amount thereof is not particularly limited. For example, the content rate of the graphitization catalyst with respect to the whole mixture may be from 0.1% by mass to 50% by mass, may be from 0.5% by mass to 40% by mass, or may be from 0.5% by mass to 30% by mass.

In the step (b), the mixture obtained in the step (a) is molded to obtain the molded product. Preferably, the mixture may be formed into a predetermined shape by a uniaxial press or the like. By molding in this way, it is possible to increase a filling amount in a graphitizing furnace, when graphitizing the mixture, to improve productivity and to improve the effect of the graphitization catalyst.

In the step (b), the method of molding the mixture is not particularly limited. Examples of the method include a molding method in which the mixture is placed in a container such as a mold and pressed in a uniaxial direction, a vibration molding method in which the mixture is placed in a container such as a mold, a heavy weight is placed on the upper surface, and vibration and impact are applied to the mold, and an extrusion molding method in which the mixture is extruded from a nozzle or the like with a horizontal push press.

In the step (b), the density of the obtained molded product is 1.3 g/cm$^3$ or less, from the viewpoint of the productivity of the negative electrode material and the cycle characteristics of the lithium ion secondary battery, is preferably from 0.8 g/cm$^3$ to 1.2 g/cm$^3$, and more preferably from 0.9 g/cm$^3$ to 1.1 g/cm$^3$. Thereby, after obtaining the molded product with a relatively low density, the thus obtained molded product is graphitized, and then the graphitized product can be ground. In this case, the graphitized product can be ground more easily than in a case in which the graphitized product obtained by using the molded product with a relatively high density is ground. As a result, there is a tendency that the ground product with a low specific surface area can be obtained. By using the negative electrode material including the ground product with a low specific surface area for the production of the lithium ion secondary battery, a contact area of the negative electrode material with the electrolytic solution can be reduced. Thereby, there is a tendency that the decomposition reaction of the electrolytic solution can be inhibited to make the battery life long, and the lithium ion secondary battery excellent in the cycle characteristics can be manufactured.

Heat treatment is preferably performed on the molded product obtained in the step (b) before the molded product is graphitized in the step (c). By performing the heat treatment, an organic component that is contained in the mixture and that does not contribute to the graphitization is removed, and gas generation in the graphitization treatment or the like tends to be inhibited.

A temperature of the above-mentioned heat treatment is not particularly limited, and is preferably lower than a heat treatment temperature in the step (c). For example, the above-mentioned heat treatment may be performed in the range of 500°C to 1000°C.

In the step (c), the mold product obtained in the step (b) is graphitized. A method of graphitizing the mold product is not particularly limited as long as the graphitizable components contained in the mixture can be graphitized. For example, a method of heat-treating the mixture in an atmosphere in which the mixture is difficult to oxidize can be mentioned. The atmosphere in which the mixture is difficult to oxidize is not particularly limited, and examples thereof include inert atmospheres such as nitrogen and argon, and vacuum.

For example, a temperature of the heat treatment for the graphitization may be 1500°C or more, may be 2000°C or more, may be 2500°C or more, or may be 2800°C or more. The upper limit of the temperature of the heat treatment is not particularly limited, and for example, may be 3200°C or less. When the temperature of the heat treatment is 1500°C or more, the graphitization tends to proceed easily due to changes in crystals. When the firing temperature is 2000°C or more, graphite crystals tend to develop better. On the other hand, when the temperature of the heat treatment for the graphitization is 3200°C or less, sublimation of part of the graphite tends to be inhibited.

In the step (d), the graphitized product obtained in the step (c) is ground to obtain the ground product. A methods of grinding is not particularly limited, and the grinding can be performed by a known method using a jet mill, a vibration mill, a pin mill, a hammer mill or the like. The ground product may be adjusted in particle size so as to have a desired size. A method of adjusting the particle size is not particularly limited, and examples thereof include a method using the above-mentioned grinding device and a method using a sieve.

As necessary, (e) a step of disposing low crystalline carbon on at least a part of the surface of the ground product, (f) a step of mixing the ground product with another negative electrode active material, or the like may be performed to the ground product obtained in the step (d).

Examples of a method of disposing the low crystalline carbon on at least a part of the surface of the ground product in the step (e) include a method of mixing a material capable of the low crystalline carbon by heat treatment (resin or the like) and the ground product and heat-treating the mixture. In a case in which the low crystalline carbon is disposed on at least a part of the surface of the ground product, input and output characteristics such as rapid charge and discharge characteristics of the lithium ion secondary battery in which the ground product is used as the negative electrode material tend to be improved.

In the step (f), the method of mixing the ground product with another negative electrode active material is not particularly limited. By mixing the ground product with another negative electrode active material, the desired characteristics of the lithium ion secondary battery can be improved as compared with the case in which only the ground product is used as the negative electrode active material. Examples of another negative electrode active material include graphite particles such as natural graphite and artificial graphite, particles containing an element capable of occluding and releasing lithium ions and are not limited to the above. The element capable of occluding and releasing lithium ions are not particularly limited, and examples thereof include Si, Sn, Ge, and In.

The ground product obtained in the step (f) includes particles in a state in which a plurality of the flat graphite particles is aggregated or bonded. The above-mentioned ground product may include particles (hereinafter, also referred to as graphite secondary particles) in a state in which a plurality of the flat graphite particles is aggregated or bonded such that main surfaces of the flat graphite particles are not parallel to each other.

In a case in which the ground product is in a state of the graphite secondary particles, the phenomenon that the particles of the negative electrode material are oriented along the direction of the current collector when the press is performed to increase the density of the negative electrode, is inhibited, and the path of lithium ions entering and exiting from the negative electrode material tends to be sufficiently secured.

Further, by including the particles in a state in which a plurality of the flat graphite particles is aggregated or bonded, voids between a plurality of the flat graphite particles reduce the effect of pressure applied during pressing to individual graphite particles and disruption of the graphite particles, generation of cracks, and the like tend to be inhibited.

In the present disclosure, "the flat graphite particles" refers to non-spheroidal graphite particles having anisotropy in shape. Examples of flat graphite particles include graphite particles having a scaly shape, a flaky shape, a partially lumpy shape, or the like.

An aspect ratio represented by A/B of the flat graphite particles is preferably, for example, from 1.2 to 20, and is more preferably from 1.3 to 10 when A is a length in a major axis direction and B is a length in a minor axis direction. When the aspect ratio is 1.2 or more, a contact area between particles increases, and conductivity tends to be further improved. When the aspect ratio is 20 or less, input and output characteristics such as rapid charge and discharge characteristics of the lithium ion secondary battery tend to be further improved.

The aspect ratio is obtained by observing graphite particles with a microscope, arbitrarily selecting 100 graphite particles, measuring A/B of each of the selected particles, and obtaining an arithmetic mean value of the measured values. In observing the aspect ratio, the length A in the major axis direction and the length B in the minor axis direction are measured as follows. That is, in a projected image of graphite particles that is observed using a microscope, two parallel tangent lines circumscribing the outer periphery of the graphite particles, which are a tangent line a1 and a tangent line a2 having a maximum distance therebetween, are selected, and a distance between the tangent line a1 and the tangent line a2 is defined as the length A in the major axis direction. In addition, two parallel tangent lines circumscribing the outer periphery of the graphite particles, which are a tangent line b1 and a tangent line b2 having a minimum distance, are selected, and a distance between the tangent line b1 and the tangent line b2 is defined as the length B in the minor axis direction.

In the present disclosure, the sentence "main surfaces are not parallel" regarding the graphite secondary particles means that the largest cross-sectional surfaces (the main surfaces) of a plurality of the flat graphite particles are not aligned in a certain direction. Whether or not the main surfaces of a plurality of flat graphite particles are not parallel to each other can be confirmed by microscopic observation. When a plurality of flat graphite particles is aggregated or bonded in a state in which the main surfaces of the graphite secondary particles are not parallel to each other, an increase in an orientation index of the main surfaces of the flat graphite particles in the negative electrode is inhibited, expansion of the negative electrode due to charging is inhibited, and thereby cycle characteristics of the lithium ion secondary battery tend to be improved.

Graphite secondary particles may partially include a structure in which a plurality of the flat graphite particles is aggregated or bonded such that the main surfaces of the flat graphite particles are parallel to each other.

In the present disclosure, the phrase "state of being aggregated or bonded" regarding a plurality of the flat graphite particles means a state in which two or more flat graphite particles are aggregated or bonded. The term "bonded" means a state in which particles are chemically bonded to each other directly or via a carbon substance. The term "aggregated" means a state in which particles are not chemically bonded to each other, but a shape of an aggregate is maintained due to a shape thereof. The flat graphite particles may be aggregated or bonded via a carbon substance. Examples of carbon substances include a graphitized product of the graphitizable binder. A state in which the two or more flat graphite particles are bonded via the carbon substance is preferable from the viewpoint of mechanical strength.

Whether or not the flat graphite particles are aggregated or bonded can be confirmed by, for example, observation with a scanning electron microscope.

For example, an average particle size of the flat graphite particles is preferably from 1 $\mu$m to 50 $\mu$m, more preferably from 1 $\mu$m to 25 $\mu$m, and still more preferably from 1 $\mu$m to 15 $\mu$m, from the viewpoint of ease of aggregation or bonding. Examples of a method of measuring the average particle size of the flat graphite particles includes a method of measuring it with a scanning electron microscope, and for example the average particle size of the flat graphite particles is an arithmetic mean value of the particle sizes of 100 graphite particles.

The flat graphite particles and the raw material thereof are not particularly limited and examples thereof include artificial graphite, scaly natural graphite, flaky natural graphite, coke, resin, tar, and pitch. Among them, graphite obtained from artificial graphite, natural graphite, or coke has high crystallinity and becomes soft particles, so that the density of the negative electrode tends to be easily increased.

The negative electrode material may include spheroidal graphite particles. In a case in which the negative electrode material includes spheroidal graphite particles, because the spheroidal graphite particles themselves have a high density, there is a tendency to reduce the press pressure required to obtain a desired electrode density.

Examples of the spheroidal graphite particles include spheroidal artificial graphite, and spheroidal natural graphite. The spheroidal graphite particles are preferably high density graphite particles from the viewpoint of densification of the negative electrode. Specifically, the spheroidal graphite particles that has been subjected to particle spheroidization treatment to increase the tap density is preferable. Further, there is a tendency that the negative electrode material layer containing the spheroidal natural graphite is excellent in peeling strength, and is less likely to peel off a current collector even if the layer is pressed with strong strength.

In a case in which the negative electrode material includes the spheroidal graphite particles, the negative electrode material may include the above-mentioned flat graphite particles and the spheroidal graphite particles. In a case in which the negative electrode material includes the above-mentioned flat graphite particles and the spheroidal graphite particles, the ratio of the two kinds of particles is not particularly limited, and can be set according to a desired electrode density, pressure conditions at the time of pressing, desired battery characteristics, and the like.

Examples of a case in which the negative electrode material includes the flat graphite particles and the spheroidal graphite particles include a state in which the flat graphite particles and the spheroidal graphite particles are mixed, a state in which the flat graphite particles and the spheroidal graphite particles are bonded (hereinafter, also referred to as composite particles). Examples of the composite particles include particles in a state in which the flat graphite particles and the spheroidal graphite particles are bonded via an organic carbide.

For example, the above-mentioned composite particles can be manufactured by using a mixture containing the flat graphite particles or the raw material thereof and the spheroidal graphite particles as the mixture in the step (a).

An average particle size of the negative electrode material manufactured by the above-mentioned method is not particularly limited. For example, the average particle size is preferably from 5 $\mu$m to 40 $\mu$m, more preferably from 10 $\mu$m to 30 $\mu$m, and still more preferably from 10 $\mu$m to 25 $\mu$m. For example, the average particle size of the negative electrode material may be measured by a scanning electron microscope in the same manner as the average particle size of the above-mentioned flat graphite particles or may be a volume average particle size (D50) measured by the laser diffraction/scattering method.

Examples of methods of measuring the average particle size in a case in which an electrode (negative electrode) is manufactured using the negative electrode material, include a method in which a sample electrode is produced, and this electrode is embedded in an epoxy resin and then mirror-polished to observe an electrode cross-sectional surface with a scanning electron microscope (for example, "VE-7800" manufactured by KEYENCE CORPORATION), and a method in which an electrode cross-sectional surface is produced using an ion milling device (for example, "E-3500" manufactured by Hitachi High-Tech Corporation) and measured with a scanning electron microscope (for example, "VE-7800" manufactured by KEYENCE CORPORATION). The average particle size in this case is a median value of 100 particle sizes arbitrarily selected from the observed particles.

For example, the above-mentioned sample electrode can be produced in the following method. A mixture of 98 parts by mass of the negative electrode material, 1 part by mass of styrene-butadiene resin as a binder, and 1 part by mass of carboxymethyl cellulose as a thickener is used as a solid content, and water is added thereto to prepare a dispersion liquid. The sample electrode is produced by applying the dispersion liquid onto a copper foil having a thickness of 10 $\mu$m so as to have a thickness of about 70 $\mu$m (at the time of coating), and then drying at 105 ° C. for 1 hour.

An orientation index of the negative electrode made of the negative electrode material (in a case in which the production of the negative electrode involves a pressing process, the negative electrode after pressing) may be 40 or less, may be 20 or less, or may be 15 or less. The above-mentioned orientation index may be 10 or more.

The orientation index of the negative electrode material is an index showing the degree of orientation of particles of the negative electrode material contained in the negative electrode. A low orientation index means that the particles of the negative electrode material are oriented in random directions. That is, this means that graphite particles are inhibited from being oriented along a surface of the current collector by a pressure at the time of pressing.

In the present disclosure, the orientation index of the negative electrode is determined by measuring a surface of a sample electrode by an X-ray diffractometer using Cu K$\alpha$ rays as an X-ray source. Specifically, an X-ray diffraction pattern of the sample electrode is measured, and the orientation index is determined from an intensity of a carbon (004) plane diffraction peak detected at around a diffraction angle of $2\theta = 53°$ to $56°$ and a carbon (110) plane diffraction peak detected at around a diffraction angle of $2\theta = 70°$ to $80°$ by Formula (1).

$$(004) \text{ plane diffraction peak intensity}/(110) \text{ plane diffraction peak intensity} \ldots \text{Formula (1)}$$

A specific surface area of the negative electrode material is preferably 3.0 m$^2$/g or less, more preferably from 0.5 m$^2$/g to 2.5 m$^2$/g or less, and still more preferably from 0.7 m$^2$/g to 2.0 m$^2$/g, from the viewpoint of the cycle characteristics and preservation characteristics.

The specific surface area of the negative electrode material may be determined by the following method. A mixed gas of nitrogen and helium (nitrogen: helium = 3: 7), and a specific surface area/pore distribution measuring device (for example, Flowsorb III 2310, Shimadzu Corporation) are used and nitrogen adsorption at the liquid nitrogen temperature (77K) is measured by a one-point method with a relative pressure of 0.3 to determine the specific surface area by a BET method.

A first embodiment of a method of manufacturing a lithium ion secondary battery of the present disclosure includes a step of producing a negative electrode by using a negative electrode material obtained by the above-mentioned method of manufacturing the negative electrode material.

A second embodiment of a method of manufacturing a lithium ion secondary battery of the present disclosure includes a step of manufacturing a negative electrode material by the above-mentioned method of manufacturing the negative electrode material; and a step of producing a negative electrode by using the negative electrode material.

The method of manufacturing the negative electrode using the negative electrode material is not particularly limited. For example, a method of forming the negative electrode material layer on the current collector using a composition containing the negative electrode material, the binder, and a solvent, and if necessary, performing heat treatment, pressing, or the like, can be mentioned.

The binder contained in the composition is not particularly limited. Examples thereof include styrene-butadiene rubber; polymer compounds in which an ethylenically unsaturated carboxylic acid ester (methyl (meth)acrylate, ethyl (meth)acrylate, butyl (meth)acrylate, hydroxyethyl (meth)acrylate, or the like) is used as a polymerization component; polymer compounds in which an ethylenically unsaturated carboxylic acid (acrylic acid, methacrylic acid, itaconic acid, fumaric acid, maleic acid, or the like) is used as a polymerization component; and polymer compounds such as polyvinylidene fluoride, polyethylene oxide, polyepichlorohydrin, polyphosphazene, polyacrylonitrile, polyimide, and polyamideimide. In the present disclosure, (meth)acrylate means either of methacrylate or acrylate, or both of methacrylate and acrylate.

The solvent contained in the composition is not particularly limited. Specifically, an organic solvent such as N-methylpyrrolidone, dimethylacetamide, dimethylformamide, $\gamma$-butyrolactone or the like; or water is used.

The composition may contain a thickener for adjusting a viscosity, if necessary. Examples of the thickeners include carboxymethyl cellulose, methyl cellulose, hydroxymethyl cellulose, ethyl cellulose, polyvinyl alcohol, polyacrylic acid and salts thereof, oxidized starch, phosphorylated starch, and casein.

The composition may contain a conductive auxiliary agent, if necessary. Examples of the conductive auxiliary agents include carbon black, graphite, acetylene black, conductive oxides, and conductive nitrides.

A material and a shape of the current collector used in the production of the negative electrode are not particularly limited. For example, it is possible to use a material such as a strip-shaped foil, a strip-shaped perforated foil, or a strip-shaped mesh made of a metal or alloy such as aluminum, copper, nickel, titanium, or stainless steel. Furthermore, it is also possible to use a porous material such as a porous metal (foamed metal) or carbon paper.

A method of forming the negative electrode material layer on the current collector using the composition is not particularly limited, and it can be performed by a known method such as a metal mask printing method, an electrostatic coating method, a dip coating method, a spray coating method, a roll coating method, a doctor blade method, a gravure coating method, or a screen printing method. In a case of integrating the negative electrode material layer and the current collector, it can be performed by a known method such as rolling, pressing, or a combination thereof.

After forming the negative electrode material layer on the current collector, heat treatment (drying) may be performed. By the heat treatment, the solvent contained in the negative electrode material layer is removed, the strength of the negative electrode material layer is increasing due to the hardening of the binder, and adhesiveness between particles and between the particles and the current collector can be improved. The heat treatment may be performed in an inert atmosphere of helium, argon, nitrogen, or the like or in a vacuum atmosphere in order to prevent oxidation of the current collector during the treatment.

After forming the negative electrode material layer on the current collector, press treatment may be performed.

By the press treatment, the electrode density of the negative electrode can be adjusted. The electrode density of the negative electrode is not particularly limited, and may be from 1.5 $g/cm^3$ to 1.9 $g/cm^3$, or may be from 1.6 $g/cm^3$ to 1.8 $g/cm^3$. As the electrode density becomes higher, a volume capacity of the negative electrode tends to be improved, adhesiveness of the negative electrode material layer to the current collector tends to be improved and the cycle characteristics tend to be improved. The press treatment is preferably performed before performing the heat treatment.

A lithium ion secondary battery manufactured by the above-mentioned method may include; the negative electrode produced by the above-mentioned method; a positive electrode; and an electrolyte. The lithium ion secondary battery may be configured, for example, so that the negative electrode and the positive electrode are disposed to face each other with a separator interposed therebetween, and an electrolytic solution containing an electrolyte is injected.

The positive electrode may be an electrode manufactured by forming a positive electrode layer on a surface of the current collector in the same manner as the negative electrode. As the current collector, it is possible to use a material such as a strip-shaped foil, a strip-shaped perforating foil, or a strip-shaped mesh made of a metal or alloy such as aluminum, titanium, or stainless steel.

A positive electrode material included in the positive electrode layer is not particularly limited. Examples thereof include metal compounds, metal oxides, metal sulfides, and conductive polymer materials which can be doped or intercalated with lithium ions. Furthermore, it is possible to use one or two or more kinds in combination from lithium cobalt oxide ($LiCoO_2$), lithium nickel oxide ($LiNiO_2$), lithium manganate ($LiMnO_2$), and complex oxides thereof ($LiCo_xNi_yMn_zO_2$, x + y + z = 1, 0 < x, 0 < y; $LiNi_{2-x}Mn_xO_4$, 0 < x ≤ 2), lithium manganese spinel ($LiMn_2O_4$), lithium vanadium compounds, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $CrsOs$, $Cr_2O_5$, olivine type $LiMPO_4$ (M: Co, Ni, Mn, Fe), conductive polymers such as polyacetylene, polyaniline, polypyrrole, polythiophene, and polyacene, porous carbon, and the like. Among them, lithium nickel oxide ($LiNiO_2$) and a complex oxide thereof ($LiCo_xNi_yMn_zO_2$, x + y + z = 1, 0 < x, 0 < y; $LiNi_{2-x}Mn_xO_4$, 0 < x ≤ 2) have a high capacity, and thus are suitable as positive electrode materials.

Examples of separators include non-woven fabrics containing a polyolefin such as polyethylene or polypropylene as a main component, cloth, microporous film, and a combination thereof. When the lithium ion secondary battery has a structure in which the positive electrode and the negative electrode are not in contact with each other, it is not necessary to use the separator.

As the electrolytic solution, it is possible to use so-called organic electrolyte solutions in which a lithium salt such as $LiClO_4$, $LiPF_6$, $LiAsF_6$, $LiBF_4$, or $LiSO_3CF_3$ is dissolved in a non-aqueous solvent containing a single component or a mixture of two or more components such as ethylene carbonate, propylene carbonate, butylene carbonate, vinylene carbonate, fluoroethylene carbonate, cyclopentanone, sulfolane, 3-methylsulfolane, 2,4-dimethylsulfolane, 3-methyl-1,3-oxazolidin-2-one, γ-butyrolactone, dimethyl carbonate, diethyl carbonate, ethyl methyl carbonate, methyl propyl carbonate, butyl methyl carbonate, ethyl propyl carbonate, butyl ethyl carbonate, dipropyl carbonate, 1,2-dimethoxyethane, tetrahydrofuran, 2-methyltetrahydrofuran, 1,3-dioxolane, methyl acetate, and ethyl acetate. Among them, the electrolytic solution containing fluoroethylene carbonate is suitable because it tends to form a stable SEI (solid electrolyte interface) on a surface of the negative electrode material and the cycle characteristics is significantly improved.

A form of the lithium ion secondary battery is not particularly limited, and examples thereof include a paper type battery, a button type battery, a coin type battery, a laminate type battery, a cylindrical type battery, and a prismatic battery. Furthermore, the negative electrode material for lithium ion secondary battery can be applied not only to the lithium ion secondary battery, but also to all electrochemical devices other than the lithium ion secondary battery such as a hybrid capacitor having a charging and discharging mechanism of inserting and desorbing lithium ions.

EXAMPLES

Hereinafter, the above-mentioned embodiment will be described more specifically based on examples, but the above-mentioned embodiments are not limited to the following examples.

[Examples 1 to 3 and Comparative Example 1]

(1) Preparation of negative electrode material

Needle coke, which is the raw material, was finely ground using a free grinder mill manufactured by Nara Machinery Co., Ltd, and then wind-classified using Turboplex (registered trademark) manufactured by HOSOKAWA MICRON CORPORATION to prepare the aggregate shown below and the materials shown below were used as the raw materials. In addition, the average particle sizes of the aggregate and the negative electrode materials, and the standard deviation of the particle size distribution of the aggregate were measured by using the particle size distribution measuring device (Shimadzu Corporation, SALD-3000) using the laser diffraction/scattering method. The standard deviation of the particle size distribution of the aggregate was the standard deviation defined on the logarithmic scale.

Aggregate 1: Needle coke with average particle size of 14 $\mu$m and standard deviation of particle size distribution of 0.15
Binder: Tar pitch
Dispersant: Stearic acid

The aggregate, the binder and the like, which were the raw materials shown in Table 1, were mixed in the amounts (parts by mass) described in Table 1 using a kneader to obtain each mixture. Then, the obtained mixture was molded by a uniaxial press at room temperature to obtain each molded product. Then, the obtained molded product was heat-treated at 800°C to 850°C for 8 hours in a nitrogen atmosphere, and then graphitized at 2600°C to 3100°C for 30 hours to obtain each graphitized product. The obtained graphitized product was ground to obtain graphite powders of each of Examples 1 to 3 and Comparative Example 1 (negative electrode material for lithium ion secondary battery).

The density (g/cm$^3$) of the molded product obtained in the above-mentioned step, the density (g/cm$^3$) of the graphitized product, and the average particle size ($\mu$m), the specific surface area (m$^2$/g), and the saturated tap density (g/cm$^3$) of the negative electrode material are shown in Table 1.

The ground product obtained in each Example includes secondary particles that were aggregated or bonded such that the main surfaces of the graphite particles, which were the graphitized product of the aggregate, were not parallel to each other.

(2) Production of negative electrode and evaluation of orientation index

After mixing 96 parts by mass of the produced negative electrode material, 1.5 parts by mass of styrene-butadiene rubber (BM-400B, manufactured by Zeon Corporation), 1.5 parts by mass of carboxymethyl cellulose (CMC1380, manufactured by Daicel Corporation) and 1.0 part by mass of carbon black (Superp, manufactured by merys Graphite & Carbon), water was added to the thus obtained mixture to obtain a composition. The obtained composition was applied to the current collector (copper foil having a thickness of 10 $\mu$m) so that the coating amount was 10 mg/cm$^2$, to form a composition layer. After the composition layer was pressured to form an electrode after pressurization, the thus obtained electrode was dried at 130°C for 8 hours using a vacuum dryer. The pressurization was performed so that the density after vacuum drying was 1.60 g/cm$^2$. The orientation index of the produced negative electrode was evaluated by the above-mentioned method.

(3) Production of evaluation cell

The negative electrode obtained above was punched into a circle with an electrode area of 1.54 cm$^2$, metallic lithium as a positive electrode, a mixed solution of ethylene carbonate/ethyl methyl carbonate (3/7 volume ratio) and vinylene carbonate (0.5% by mass) which contained 1.0 M LiPF$_6$ as an electrolyte solution, a polyethylene microporous membrane having a thickness of 25 $\mu$m as a separator, and a copper plate having a thickness of 230 $\mu$m as a spacer were used to produce a 2016 type coin cell, and this cell was used as an evaluation cell.

(4) Evaluation of battery characteristics

An initial discharging capacity (Ah/kg) and initial charge and discharge efficiency (%) were measured by using the produced evaluation cell. Specifically, the evaluation cell was placed in a constant temperature bath kept at 25°C, charged with constant current at 0.53 mA until the voltage reached 0 V, and then further charged at a constant voltage of 0 V until the current attenuated to a value corresponding to 0.026 mA, and the initial charging capacity was measured. After charging, the cell was paused for 30 minutes and then discharged. The cell was discharged at 0.53 mA until the voltage reached 1.5 V, and an initial discharging capacity was measured. At this time, the capacities were converted per mass of the negative electrode material used. The value obtained by dividing the initial discharging capacity by the initial charging capacity and then being multiplied by 100 was defined as an initial charge and discharge efficiency (%). The results are shown in Table 1.

(5) Evaluation of quick charging capacity retention rate

The negative electrode obtained above was punched into a circle with an electrode area of 2.00 cm$^2$, and an electrode, in which lithium cobalt oxide was applied to aluminum foil, as a positive electrode, a mixed solution of ethylene carbonate/ethyl methyl carbonate (3/7 volume ratio) and vinylene carbonate (0.5% by mass) which contained 1.0 M LiPF$_6$ as an electrolyte solution, a polyethylene microporous membrane having a thickness of 25 $\mu$m as a separator, and a spring spacer as a spacer were used to produce a 2016 type coin cell. This coin cell was used as an evaluation cell.

Aging treatment before a quick charging test was performed using the produced evaluation cell. Specifically, the evaluation cell was placed in a constant temperature bath kept at 25°C, charged with a constant current at 0.92 mA until the voltage reached 4.2 V, and then further charged at a constant voltage of 4.2 V until the current attenuated to a value corresponding to 0.046 mA. After charging, the cell was paused for 10 minutes and then discharged at 0.92 mA until the voltage reached 2.75 V. This charging and discharging was repeated for 5 cycles.

The quick charging test was performed using the aged evaluation cell. Specifically, the evaluation cell was placed in a constant temperature bath kept at 25°C, charged with a constant current at 0.92 mA until the voltage reached 4.2 V, and a charging capacity (1) was measured. After charging, the cell was paused for 10 minutes and then discharged. The cell was discharged at 4.6 mA until the voltage reached 2.75 V. Further, the cell was charged with constant current at 6.9 mA until the voltage reached 4.2 V, and a charging capacity (2) was measured. After charging, the cell was paused for 10 minutes and then discharged at 4.6 mA until the voltage reached 2.75 V.

The value obtained by dividing the charging capacity (2) by the charging capacity (1) and then being multiplied by 100 was defined as a quick charging capacity retention rate (%). The results are shown in Table 1.

(6) Evaluation of battery life

An evaluation cell was prepared and the evaluation cell was aged in the same manner as the above-mentioned (5). A cycle test was performed and evaluation of a battery life was performed using the aged evaluation cell. Specifically, the evaluation cell was placed in a constant temperature bath kept at 25°C, charged with a constant current at 4.6 mA until the voltage reached 4.2V, and then further charged at a constant voltage of 4.2 V until the current attenuated to a value corresponding to 0.046 mA. After charging, the cell was paused for 10 minutes, then was discharged at 4.6 mA until the voltage reached 2.75 V, and an initial discharging capacity was measured. This charging and discharging was further repeated for 299 cycles and a discharging capacity at the 300th cycle was measured.

The value obtained by dividing the discharging capacity at the 300th cycle by the initial discharging capacity and then being multiplied by 100 was defined as a battery life retention rate (%). The results are shown in Table 1.

[Table 1]

|  | Example 1 | Example 2 | Example 3 | Comparative Example 1 |
|---|---|---|---|---|
| Aggregate 1 (parts by mass) | 85 | 85 | 80 | 85 |
| Binder (parts by mass) | 15 | 15 | 20 | 15 |
| Dispersant (parts by mass) | 3 | 3 | 3 | 3 |
| Density of molded product (g/cm$^3$) | 0.8 | 1 | 1 | 1.4 |
| Density of graphitized product (g/cm$^3$) | 0.75 | 0.9 | 0.95 | 1.35 |
| Average particle size of negative electrode material ($\mu$m) | 19.3 | 20.1 | 19.5 | 20.4 |
| Specific surface area of negative electrode material (g/cm$^3$) | 1.5 | 1.8 | 1.8 | 2.8 |
| Saturated tap density (g/cm$^3$) | 1.11 | 1.08 | 1.07 | 1.05 |
| Orientation index | 13.1 | 14.8 | 14.9 | 15.6 |
| Initial discharging capacity (Ah/kg) | 347 | 345 | 343 | 345 |
| Initial charge and discharge efficiency (%) | 93.7 | 93.5 | 93.3 | 93.3 |
| Quick charging capacity retention rate (%) | 80.0 | 76.7 | 78.6 | 73.5 |
| Battery life retention rate (%) | 92.1 | 91.4 | 91.5 | 89.1 |

As shown in Table 1, the evaluation cells produced by using the negative electrode materials (Examples) produced by the method of the present disclosure showed better evaluation of the quick charging capacity retention rate and the battery life retention rate as compared with the evaluation cell produced by using the negative electrode material (Comparative Example) produced the conventional manufacturing method (density of molding product is high).

**Claims**

1. A method of manufacturing a negative electrode material for a lithium ion secondary battery, the method comprising:

   (a) a step of obtaining a mixture containing a graphitizable aggregate and a graphitizable binder;
   (b) a step of obtaining a molded product with a density of 1.3 $g/cm^3$ or less by molding the mixture;
   (c) a step of obtaining a graphitized product by graphitizing the molded product; and
   (d) a step of obtaining a ground product by grinding the graphitized product,

   wherein the graphitizable aggregate includes coke, the graphitizable binder includes at least one selected from the group consisting of a pitch, a tar, a thermoplastic resin and a thermosetting resin and a content of the graphitizable binder is from 10 parts by mass to 30 parts by mass with respect to 100 parts by mass of the graphitizable aggregate or a content rate of the graphitizable binder is from 10% by mass to 25% by mass with respect to the mixture.

2. The method of manufacturing a negative electrode material for a lithium ion secondary battery according to claim 1, wherein a standard deviation of particle size distribution of the aggregate is less than 0.20.

3. The method of manufacturing a negative electrode material for a lithium ion secondary battery according to claim 1 or claim 2, wherein the mixture comprises a dispersant, and the dispersant includes a hydrocarbon, a fatty acid, a fatty acid metal salt, a fatty acid amide, a fatty acid ester, or a higher alcohol.

4. The method of manufacturing a negative electrode material for a lithium ion secondary battery according to claim 3, wherein the dispersant comprises the fatty acid.

5. A method of manufacturing a lithium ion secondary battery, the method comprising a step of producing a negative electrode by using a negative electrode material obtained by the method of manufacturing a negative electrode material for a lithium ion secondary battery according to any one of claims 1 to 4.

6. A method of manufacturing a lithium ion secondary battery, the method comprising: a step of manufacturing a negative electrode material by the method of manufacturing a negative electrode material for a lithium ion secondary battery according to any one of claims 1 to 4; and a step of producing a negative electrode by using the negative electrode material for a lithium ion secondary battery.


**Patentansprüche**

1. Verfahren zum Herstellen eines negativen Elektrodenmaterials für eine Lithium-Ionen-Sekundärbatterie, wobei das Verfahren umfasst:

   (a) einen Schritt zum Erhalten einer Mischung, die ein graphitierbares Aggregat und ein graphitierbares Bindemittel enthält;
   (b) einen Schritt zum Erhalten eines geformten Produkts mit einer Dichte von 1,3 $g/cm^3$ oder weniger durch Formen der Mischung;
   (c) einen Schritt zum Erhalten eines graphitierten Produkts durch Graphitieren des geformten Produkts; und
   (d) einen Schritt zum Erhalten eines gemahlenen Produkts durch Mahlen des graphitierten Produkts,

   wobei das graphitierbare Aggregat Koks einschließt, das graphitierbare Bindemittel mindestens eines einschließt, das ausgewählt ist aus der Gruppe bestehend aus einem Pech, einem Teer, einem thermoplastischen Harz und einem wärmehärtbaren Harz, und ein Gehalt des graphitierbaren Bindemittels 10 Masseteile bis 30 Masseteile beträgt, bezogen auf 100 Masseteile des graphitierbaren Aggregats, oder eine Gehaltrate des graphitierbaren Bindemittels 10 Gew.-% bis 25 Gew.-% beträgt, bezogen auf die Mischung.

2. Verfahren zum Herstellen eines negativen Elektrodenmaterials für eine Lithium-Ionen-Sekundärbatterie nach Anspruch 1, wobei eine Standardabweichung der Partikelgrößenverteilung des Aggregats weniger als 0,20 beträgt.

3. Verfahren zum Herstellen eines negativen Elektrodenmaterials für eine Lithium-Ionen-Sekundärbatterie nach Anspruch 1 oder Anspruch 2, wobei die Mischung ein Dispergiermittel umfasst, und das Dispergiermittel einen Kohlenwasserstoff, eine Fettsäure, ein Fettsäuremetallsalz, ein Fettsäureamid, einen Fettsäureester oder einen höheren Alkohol einschließt.

**4.** Verfahren zum Herstellen eines negativen Elektrodenmaterials für eine Lithium-Ionen-Sekundärbatterie nach Anspruch 3, wobei das Dispergiermittel die Fettsäure umfasst.

**5.** Verfahren zum Herstellen einer Lithium-Ionen-Sekundärbatterie, wobei das Verfahren einen Schritt zum Herstellen einer negativen Elektrode unter Verwendung eines negativen Elektrodenmaterials, erhalten durch das Verfahren zum Herstellen eines negativen Elektrodenmaterials für eine Lithium-Ionen-Sekundärbatterie nach einem der Ansprüche 1 bis 4, umfasst.

**6.** Verfahren zum Herstellen einer Lithium-Ionen-Sekundärbatterie, wobei das Verfahren umfasst: einen Schritt zum Herstellen eines negativen Elektrodenmaterials durch das Verfahren zum Herstellen eines negativen Elektrodenmaterials für eine Lithium-Ionen-Sekundärbatterie nach einem der Ansprüche 1 bis 4; und einen Schritt zum Herstellen einer negativen Elektrode unter Verwendung des negativen Elektrodenmaterials für eine Lithium-Ionen-Sekundärbatterie.

**Revendications**

**1.** Procédé de fabrication d'un matériau d'électrode négative pour une batterie secondaire au lithium-ion, le procédé comprenant :

   (a) une étape d'obtention d'un mélange contenant un agrégat graphitisable et un liant graphitisable ;
   (b) une étape d'obtention d'un produit moulé avec une densité de 1,3 g/cm$^3$ ou moins par moulage du mélange ;
   (c) une étape d'obtention d'un produit graphitisé par graphitisation du produit moulé ; et
   (d) une étape d'obtention d'un produit broyé par broyage du produit graphitisé,

dans lequel l'agrégat graphitisable inclut du coke, le liant graphitisable inclut au moins un sélectionné dans le groupe consistant en un brai, un goudron, une résine thermoplastique et une résine thermodurcissable et une teneur du liant graphitisable est de 10 parties en masse à 30 parties en masse par rapport à 100 parties en masse de l'agrégat graphitisable ou un taux de teneur du liant graphitisable est de 10 % en masse à 25 % par masse par rapport au mélange.

**2.** Procédé de fabrication d'un matériau d'électrode négative pour une batterie secondaire au lithium-ion selon la revendication 1, dans lequel un écart type de distribution granulométrique de l'agrégat est inférieur à 0,20.

**3.** Procédé de fabrication d'un matériau d'électrode négative pour une batterie secondaire au lithium-ion selon la revendication 1 ou la revendication 2, dans lequel le mélange comprend un dispersant, et le dispersant inclut un hydrocarbure, un acide gras, un sel métallique d'acide gras, un amide d'acide gras, un ester d'acide gras, ou un alcool supérieur.

**4.** Procédé de fabrication d'un matériau d'électrode négative pour une batterie secondaire au lithium-ion selon la revendication 3, dans lequel le dispersant comprend l'acide gras.

**5.** Procédé de fabrication d'une batterie secondaire au lithium-ion, le procédé comprenant une étape de production d'une électrode négative en utilisant un matériau d'électrode négative obtenu par le procédé de fabrication d'un matériau d'électrode négative pour une batterie secondaire au lithium-ion selon l'une quelconque des revendications 1 à 4.

**6.** Procédé de fabrication d'une batterie secondaire au lithium-ion, le procédé comprenant : une étape de fabrication d'un matériau d'électrode négative par le procédé de fabrication d'un matériau d'électrode négative pour une batterie secondaire au lithium-ion selon l'une quelconque des revendications 1 à 4 ; et une étape de production d'une électrode négative en utilisant le matériau d'électrode négative pour une batterie secondaire au lithium-ion.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3131143 A1
- WO 2012133699 A1
- US 2004023115 A1
- EP 1478038 A1